# EUROPEAN PATENT SPECIFICATION

(11) **EP 1 314 307 B1**
(45) Date of publication and mention of the grant of the patent: **11.08.2004**
(21) Application number: 01960792.8
(22) Date of filing: 14.08.2001
(51) Int. Cl.: H04M 17/00, H04Q 7/22

(54) **PREPAID SERVICE IN A PACKET-SWITCHED MOBILE COMMUNICATION NETWORK**
VORBEZAHLTER DIENST IN EINEM PAKETVERMITTELTEN MOBILKOMMUNIKATIONSNETZ
SERVICE PREPAYE DANS UN RESEAU DE COMMUNICATION MOBILE A COMMUTATION PAR PAQUETS

(30) Priority: 14.08.2000 FI 20001788
(43) Date of publication of application: 28.05.2003
(73) Proprietor: TeliaSonera Finland Oyj, 00510 Helsinki (FI)
(72) Inventor: ALA-LUUKKO, Sami, FIN-00200 Helsinki (FI)
(74) Representative: Simmelvuo, Markku
(86) International application number: PCT/FI2001/000716
(87) International publication number: WO 2002/015554

(56) References cited:
- WO-A1-00/24161
- WO-A1-00/69118
- WO-A1-99/16262
- WO-A1-99/16281
- US-A- 5 854 975

## Description

The invention relates to telecommunication systems. In particular, the invention relates to a system in which a prepaid service is implemented in a general packet radio service (GPRS, General Packet Radio Service). In a prepaid service, the client first deposits currency into the account of the service provider that the client may use while utilizing the service provided by the service provider.

### PRIOR ART

With the popularity of the global system for mobile communication (GSM, Global System for Mobile Communication), more and more new systems are being developed for the digital communication. The central components of the global system for mobile communication are the mobile station, which is identified in the telecommunication network by means of a subscriber identity module, and the base station, which establishes a telecommunication connection with the mobile station by a radio path, and determines a cell area within which the mobile station may move without a handover. Several cell areas form the telecommunication network system. The roaming of a mobile station is used to mean the visit of a mobile station in the area of a telecommunication system of another operator. The subscriber information of the mobile communication system is saved in the home location register (HLR, Home Location Register). In the future, the global system for mobile communication system is possibly going to change into a universal mobile telecommunications system (UMTS, Universal Mobile Telecommunications System).

One known technique is the general packet radio service in which information in a digital packet form is transferred. The packet-switched radio service has been standardized by the European Telecommunications Standards Institute (ETSI, European Telecommunications Standards Institute). The packet-switched radio service enables one to flexibly transfer information to end users by packet-switched protocols, examples of which are e.g. the Internet protocol (IP, Internet Protocol) and X.25. Typically, the packet-switched radio service is used to efficiently transfer information because it enables one to define one to eight time slots for data transfer.

For implementing the packet-switched radio service in the global system for mobile communication, two new network nodes are needed, among other things. The serving GPRS support node (SGSN, Serving GPRS Support Node) monitors the locations of separate mobile stations and implements security operations and access control. The gateway GPRS support node (GGSN, Gateway GPRS Support Node) connected to the serving GPRS support node implements the telecommunication connection to external packet-switched telecommunication networks. In addition, for the packet-switched radio service one needs the registration of the subscribers belonging to the access network in the home location register.

To bring Internet services into wireless mobile stations, a wireless application protocol (WAP, Wireless Application Protocol) has been developed. The protocol enables one to define the connection setup from a mobile station to the Internet, which allows one to access the World Wide Web browser program, e-mail program and other Internet applications using the mobile station. Also other so-called micro browser programs are known, examples of which are e.g. I-mode over GPRS and Compact HTML over GPRS.

Previously known is a solution for the enhancement of customized applications in a mobile network (CAMEL, Customized Applications for Mobile network Enhanced). With the solution, the operator may implement services to a subscriber of its own network visiting the telecommunication network of another operator. The CAMEL has been presented e.g. in the standard TS 22.078 V.3.2.0 (1999-12) of the 3^{rd} generation partnership project (3GPP, 3^{rd} Generation Partnership Project).

Further, previously known is the implementation of services in telecommunication networks by means of so-called intelligent networks. An intelligent network (IN, Intelligent Network) is a telephone network system in which the logic needed for the implementation of the services has been placed in a separate unit, which is not necessarily located in the telephone exchange. In that case, it is possible to advantageously develop the services without having to re-plan the central equipment. The system comprises several nodes, of which let it be mentioned the service control point (SCP, Service Control Point).

A typical service used in an intelligent network is a prepaid service. In the service, the subscriber first deposits a certain amount of currency into the account of the service provider, after which the subscriber may use the service. The subscriber is debited for using the service, in which case the service provider deducts the amount of currency in the account. If there is no currency in the account of the subscriber, then s(he) cannot use the service. Only when the subscriber has deposited more currency into the account, e.g. via a telephone number liable to charge, s(he) can re-call the service. Often as the criteria of debiting, a billing based on time or amount of information transferred is used.

One example of using intelligent network for implementing a prepaid service is disclosed in WO 00/24161A. Document WO 00/24161A discloses a system and a method for charging a subscriber in a telecommunications network. It also discloses a GPRS prepaid service implemented with intelligent network. The mediator unit charging the subscriber is implemented with the service control function of the intelligent network.Instead of using an account, also credits may be used. In that case, the subscriber buys from the operator connection time on credit, of which a set of credits and an entry in the database of the service provider are saved. The value of one credit may be e.g. one minute of connection time. When the client uses the service, the credits saved to the database are deducted according to some suitable debiting criterion.

One specific problem is becoming the implementation of the prepaid service in a packet-switched radio service network. The implementation of the service requires the implementation of circuit-switched components in a packet-switched radio service network, which is costly and cumbersome.

Previously known is a solution in which a debiting service is implemented in the mobile communication network by enhancement of customized applications (CAMEL). The solution requires that to the serving GPRS support node (SGSN), the interface of the intelligent network is added that is able to communicate with the service control point of the intelligent network (SCP, Service Control Point). The solution is, however, complicated as compared to the sending of messages presented by the invention, as well as to the adding of one essential component. At present, not a single device manufacturer has implementations of the packet-switched radio service network of first phase supporting the CAMEL solution. Furthermore, in the roaming situation of a mobile station the CAMEL solution would require that the serving GPRS support node (SGSN) of each operator belonging to the roaming contract of the mobile station would support the CAMEL functionality in question. For the time being, it seems that this will not happen very fast.

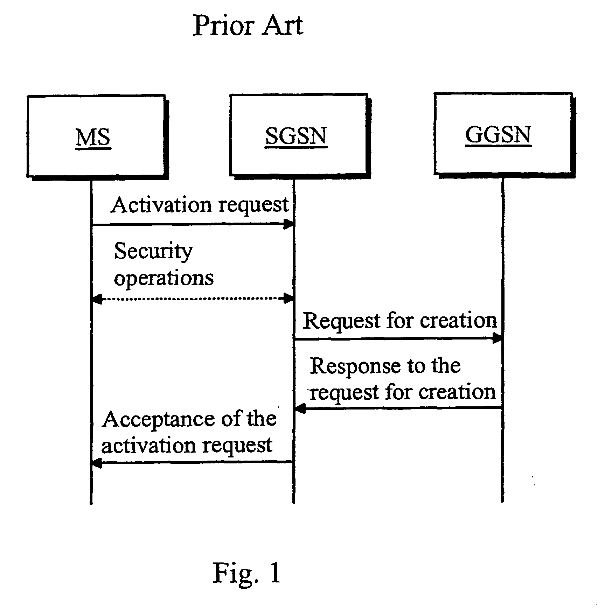

Fig. 1 represents one prior-art signaling diagram. The diagram illustrates the transmission of messages between the components of the telecommunication network MCN. The components of the figure are a mobile station MS, serving GPRS support node SGSN and gateway GPRS support node GGSN. At first, the mobile station MS sends a request for service activation to the serving GPRS support node SGSN, which checks the authenticity of the information of the mobile station MS by security operations. Next, a request for telecommunication connection setup is sent from the serving GPRS support node SGSN to the gateway GPRS support node GGSN. When the telecommunication connection has been set up, a message informing thereof is sent to the serving GPRS support node SGSN, from which a response is further transmitted to the mobile station MS.

### OBJECTIVE OF THE INVENTION

The objective of the present invention is to eliminate or alleviate the problems referred to above. One further objective of the invention is to enable a considerably simple method for the implementation of a prepaid service in a general packet radio system.

### BRIEF DESCRIPTION OF THE INVENTION

The invention enables one to implement a billing system of a digital service by monitoring the telecommunication connection between a mobile station and a content server implementing the service. Information of the use of the service is gathered on a control server located in the telecommunication network, from which the information is further transferred to the billing database.

The invention relates to a method in which the prepaid service is implemented in a packet-switched mobile network. In the method, a mobile station is delivered the information requested by it, in accordance with the service, as long as there is prepaid balance left in the database. At first, in the method there is defined an access point name definition which points to the service node via which the prepaid service is used. Further in the method, the traffic between the mobile station and the content server is monitored by means of the control server after there was the access point definition mentioned in the activation request of the data service sent from the mobile station. The monitoring proceeds as long as the aforementioned data service is active. Finally in the method, the prepaid service balance in the billing database is updated for the use of the data service based on the monitoring of the control server.

In one embodiment of the invention, the access point definition is placed in the home location register. In another embodiment of the invention, prior to the monitoring of the traffic between the mobile station and the content server, the balance of the prepaid service is checked from the billing database and the use of the prepaid service is barred, if the prepaid balance in the billing database is not sufficient for using the service.

In one embodiment of the invention, during monitoring the traffic between the mobile station and the content server, the balance of the prepaid service is checked from the billing database and the use of the prepaid service is barred, if the balance in the billing database is not sufficient for using the service.

In one embodiment of the invention, the use of the prepaid service is barred by stopping the transmitting of the packets to be sent to the mobile station.

In one embodiment of the invention, the use of the prepaid service is barred by sending a message to the gateway GPRS support node.

In one embodiment of the invention, the billing database is updated by attributing the follow-up information based on the subscriber number (MSISDN).

In one embodiment of the invention, the billing database is updated by attributing the follow-up information based on the subscriber number (IMSI).

In one embodiment of the invention, the wireless protocol is used as the protocol of the gateway. Usually the billing is based on a real-time billing that is debited either by transaction or time debiting basis. On the other hand the billing may also be based on the amount of information transferred.

In one embodiment of the invention, the database is placed on the control server. Typically, the database is placed in the SDP node of the intelligent network or the internal database of the prepaid service node. The different definitions of the subscriber, such as the access point definition, are made in the home location register. Also other information related to the subscriber may be saved to the database.

For implementing the system of the prepaid service, a set of components of the mobile communication system is needed. First, one will need a mobile communication network to which there is connected a mobile station. A service node connected to the mobile communication network establishes a connection between the service and the mobile communication network. In one advantageous embodiment of the invention, the service node consists of a gateway GPRS support node and a serving GPRS support node. Further, to the service node there is connected a control server for monitoring the traffic. To a database attached to the control server, billing information is saved.

The system needed to implement the service in accordance with the invention consists of an access point attribute, control and update unit. The access point attribute is used to point out the service node via which it is possible to use the prepaid service. The control unit is adapted to monitor the data communication between the mobile station and the prepaid service, and the prepaid balance of the mobile station is checked from the billing database. The update unit is adapted to update the prepaid balance of the mobile station in the database based on the use of the data service.

In one embodiment of the invention, the system comprises barring facilities for barring the use of the prepaid service, if there is not enough balance for using the prepaid service.

Usually as the mobile communication network, a packet-switched radio service is used, instead of which one may use the global system for mobile communication.

In one embodiment of the invention, the control server is integrated with the gateway GPRS support node.

The present invention enables one to implement the prepaid service in a packet-switched mobile network by adding a few components to the existing telecommunication network. The system in accordance with the invention works also in roaming. The implementation of the invention does not require any specific functionality of the serving GPRS support node of the roaming network.

### BRIEF DESCRIPTION OF THE DRAWINGS

In the following section, the invention will be described by the aid of the attached examples of its embodiments with reference to the accompanying drawing, in which
Fig. 2 illustrates one system in accordance with the invention,
Fig. 3 represents one flow diagram illustrating the method of the invention,
Fig. 4 represents one signaling diagram in accordance with the invention for setting up and setting down a service connection,
Fig. 5 represents one signaling diagram in accordance with the invention for implementing the access right of the prepaid service, and
Fig. 6 represents one signaling diagram in accordance with the invention for implementing an Internet service.

### DETAILED DESCRIPTION OF THE INVENTION

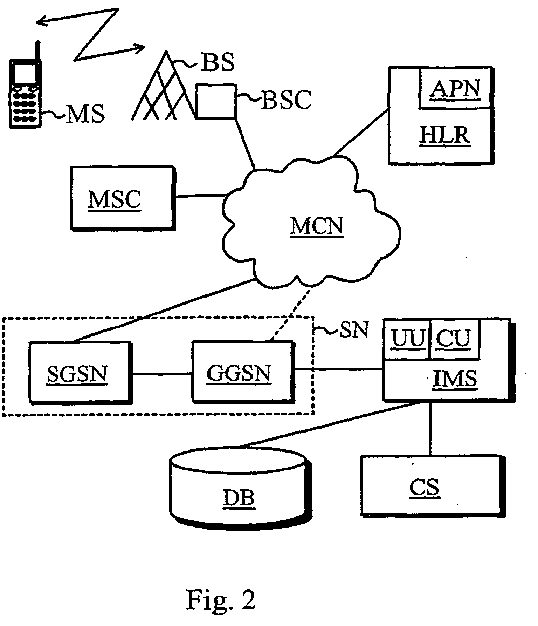

Fig. 2 represents one system in accordance with the invention. As the mobile communication network MCN, the global system for mobile communication (GSM) is usually used, in which there is implemented a general packet radio service (GPRS). The radio service comprises at least a service node SN which consists of a serving GPRS support node SGSN and gateway GPRS support node GGSN. The telecommunication connection is established from the mobile station via the base station BS and base station control BSC to the mobile communication network MCN. Further, a telecommunication connection is established from the mobile communication network MCN to the content server CS providing the service via the service node SN and a control server IMS. Information of the use of the service is gathered to a database DB attached to the control server IMS. The mobile communication network comprises also a mobile services switching center MSC and a home location register HLR. In one embodiment of the invention, the access point name definition APN is placed into the home location register HLR. In another embodiment of the invention, a control unit CU and an update unit UU of the database DB are arranged in the control server.

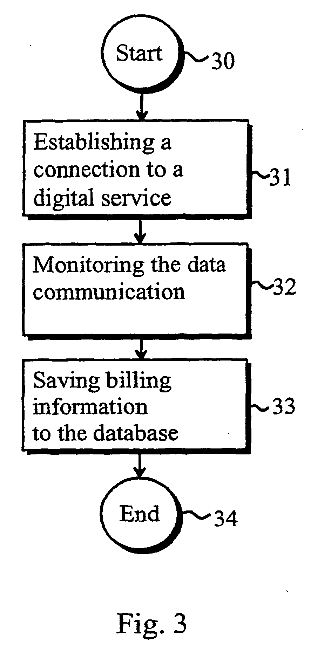

Fig. 3 represents one diagram illustrating the method of the invention. The figure shows the gathering of the billing information to the database DB. At first, from the mobile station MS there is established a connection to the digital service, which is usually located in the content server CS, block 31. Next, the data communication to be transferred by way of the connection is monitored using the control server IMS, block 32. To the database DB there is saved billing information of the data communication, examples of which are e.g. connection time and the amount of information to be transferred using the connection, block 33.

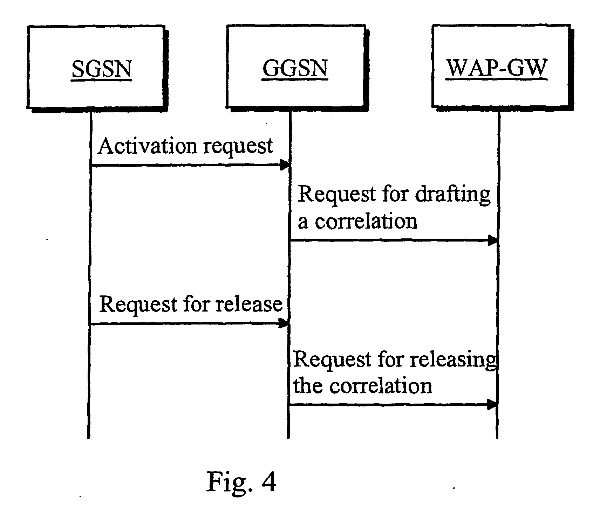

Fig. 4 represents one signaling diagram in accordance with the invention. In the figure there is set up and set down a connection from a serving GPRS support node SGSN to a wireless application,protocol gateway node WAP-GW via a gateway GPRS support node GGSN. The connection is activated by sending an activation request from the serving GPRS support node SGSN to the wireless application protocol gateway node WAP-GW via the gateway GPRS support node GGSN. After the use of the service, the connection is set down by sending a request for set-down from the serving GPRS support node SGSN to the wireless application protocol gateway node WAP-GW via the gateway GPRS support node GGSN. Further, in the figure there is drafted a correlation between the Internet IP address and the MSISDN or IMSI. Usually, the subscriber databases function based on the MSISDN or IMSI. The correlation between the IP address and the MSISDN or IMSI is necessary because the gateway node of the wireless application protocol WAP-GW sees only the IP address in the packets received by it and not the subscriber number MSISDN or IMSI.

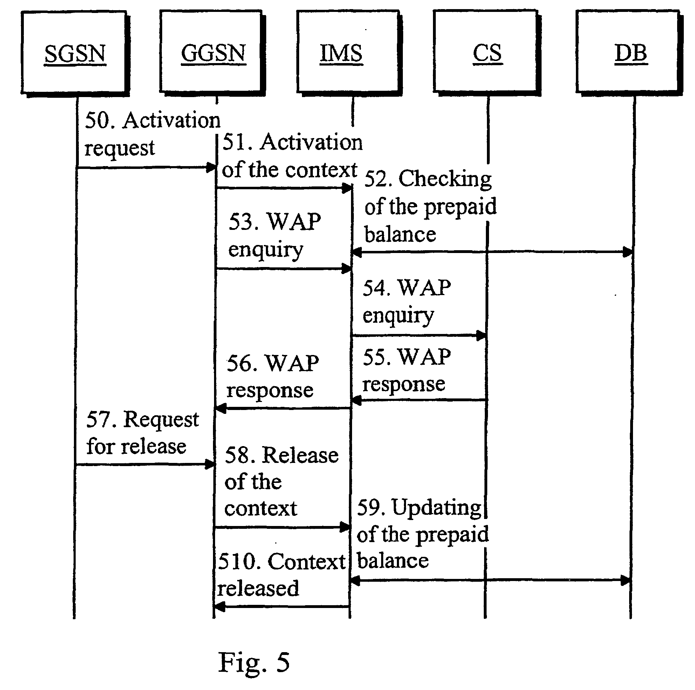

Fig. 5 represents one signaling diagram in accordance with the invention. In the invention there is set up and set down a connection from a serving GPRS support node SGSN to a content server CS via a control server IMS. The balance information is checked from the control server IMS and updated in the database DB when necessary.

At first there is transmitted an activation request from the serving GPRS support node SGSN to a gateway GPRS support node GGSN, from which there is sent an activation of the context to the control server IMS, blocks 50 and 51. The control server IMS checks the balance of the prepaid service of the subscriber from a database DB, block 52. Next, the gateway GPRS support node GGSN starts to transmit a WAP enquiry via the control server IMS to the content server CS, if according to the database DB, the subscriber can be granted the access to the service, blocks 53 and 54. The content server CS implements the digital service in accordance with the WAP enquiry and sends a response to it, blocks 55 and 56. Further, the connection is set down by sending a request for set-down from the serving GPRS support node SGSN to the content server CS via the gateway GPRS support node GGSN and control server IMS, blocks 57 and 58. At the request for set-down, the content server CS sends a message to update the prepaid balance to the database DB and a message to release the context to the gateway GPRS support node GGSN, blocks 59 and 510. The billing may be implemented either by transaction basis or by applying the time debiting. The figure shows an example of the time debiting.

When the context is activated, the MSISDN/IMSI information may be transmitted to the application protocol gateway node WAP-GW, e.g. via a radius protocol. Correspondingly, notification of the release of the context may be transmitted using the radius protocol. In one embodiment of the invention it is possible to find out, using the radius protocol, from the gateway GPRS support node GGSN when a prepaid type of context is activated and when it is released. The control server IMS receives the information using the radius protocol and sees to that the prepaid database DB is updated.

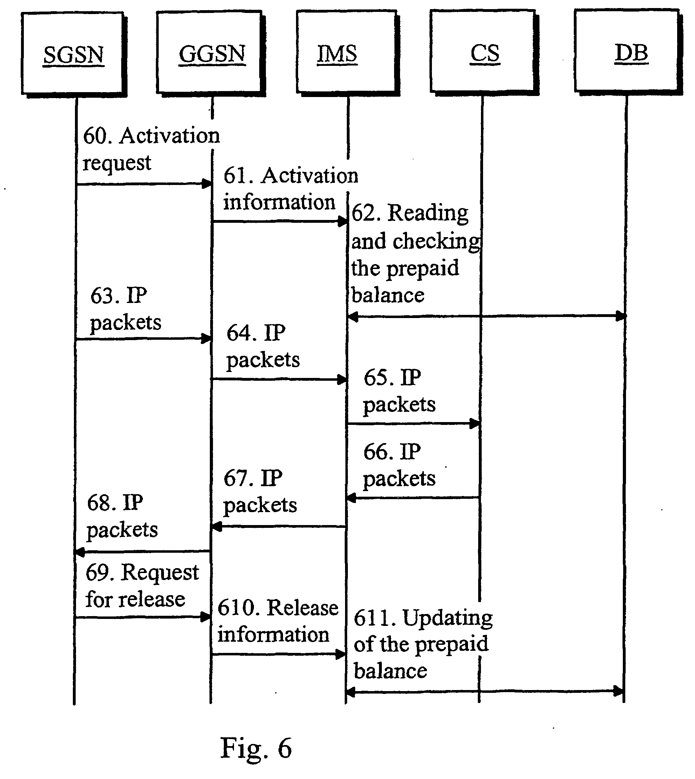

Fig. 6 represents one signaling diagram in accordance with the invention. The diagram shows the establishing of a telecommunication connection between a serving GPRS support node SGSN and a content server CS. At first, an activation request of connection is sent via a gateway GPRS support node GGSN to a control server IMS, from which the subscriberis prepaid balance in a billing database DB is checked, blocks 60, 61 and 62. If the subscriber is granted the access to the service, then packets as defined in the Internet protocol are sent between the serving GPRS support node SGSN, gateway GPRS support node GGSN, control server IMS and content server CS, blocks 63-68. When one stops the use of the service, a request for release is sent from the serving GPRS support node SGSN to the content server CS, after which the costs resulting from the use of the service are deducted from the subscriberis balance in the prepaid database DB, blocks 69, 610 and 611.

In one embodiment as shown in Fig. 6, the prepaid balance of the subscriber is actively updated during the connection. If it is found out that the subscriberis prepaid balance is running out, the control server IMS stops transmitting the IP packets or sends to the gateway GPRS support node GGSN a request to terminate the connection.

In one embodiment as shown in Fig. 6, the prepaid service has been integrated with the gateway GPRS support node GGSN. In the gateway GPRS support node GGSN there is also implemented a time-based billing based on the amount of information transferred. It is also possible to implement in the gateway GPRS support node GGSN a transaction-based billing when necessary.

The invention is not restricted merely to the examples of its embodiments referred to above, instead many variations are possible within the scope of the inventive idea defined by the claims.

## Claims

1. A method for implementing a prepaid service in a packet-switched mobile communication network (MCN), in which method a mobile station (MS) is delivered the information requested by it as long as there is prepaid balance left in which method:
a GPRS gateway support node (GGSN) is applied for monitoring the locations of separate mobile stations;
a content server (CS) is applied for implementing the service;
a data service is applied for data communication to be charged;
a control server (IMS) is applied for controlling the information;
a billing database (DB) is applied for storing the billing information;
**characterized in that** the method further comprises the steps of:
defining an access point name definition (APN) which points to the gateway GPRS support node (GGSN) via which it is possible to use the prepaid service;
monitoring the traffic between the mobile station (MS) and the content server (CS) by means of a control server (IMS) after there was the access point name definition mentioned in the activation request of the data service sent from the mobile station (MS), which monitoring proceeds as long as the aforementioned data service is active, and
updating the prepaid service balance in the billing database (DB) based on the monitoring of the control server (IMS).

2. The method according to claim 1, **characterized in that** the access point name definition is arranged in a home location register (HLR).

3. The method according to claim 1 or 2, **characterized in that** prior to the monitoring of the traffic between the mobile station (MS) and the content server (CS),
the balance of the prepaid service is checked from the billing database (DB); and
the use of the prepaid service is barred, if the prepaid balance in the billing database (DB) is not sufficient for using the service.

4. The method according to claim 1, 2 or 3, **characterized in that** during the monitoring of the traffic between the mobile station (MS) and the content server (CS),
the balance of the prepaid service is checked from the billing database (DB); and
the use of the prepaid service is barred, if the prepaid balance in the billing database (DB) is not sufficient for using the service.

5. The method according the claim 1, 2, 3 or 4, **characterized in that** the use of the prepaid service is barred by stopping the transmitting of the packets to be sent to the mobile station (MS).

6. The method according to claim 1, 2, 3, 4 or 5, **characterized in that** the use of the prepaid service is barred by sending a message to the gateway GPRS support node (GGSN).

7. The method according to claim 1, 2, 3, 4, 5 or 6, **characterized in that** the billing database (DB) is updated by attributing the follow-up information based on the subscriber number (MSISDN).

8. The method according to claim 1, 2, 3, 4, 5, 6 or 7, **characterized in that** the billing database (DB) is updated by attributing the follow-up information based on the subscriber number (IMSI).

9. The method according to claim 1, 2, 3, 4, 5, 6, 7 or 8, **characterized in that** the wireless application protocol is used in the connection.

10. The method according to claim 1, 2, 3, 4, 5, 6, 7, 8 or 9, **characterized in that** a real-time billing is arranged in the control server (IMS).

11. The method according to claim 1, 2, 3, 4, 5, 6, 7, 8, 9 or 10, **characterized in that** a transaction-based billing is arranged in the control server (IMS).

12. The method according to claim 1, 2, 3, 4, 5, 6, 7, 8, 9, 10 or 11, **characterized in that** a time debiting-based billing is arranged in the control server (IMS).

13. The method according to claim 1, 2, 3, 4, 5, 6, 7, 8, 9, 10, 11 or 12, **characterized in that** a billing based on the amount of information transferred is arranged in the control server (IMS).

14. The method according to claim 1, 2, 3, 4, 5, 6, 7, 8, 9, 10, 11, 12 or 13, **characterized in that** the database (DB) is placed on the control server (IMS).

15. The method according to claim 1, 2, 3, 4, 5, 6, 7, 8, 9, 10, 11, 12, 13 or 14, **characterized in that** the database (DB) is placed in the SDP node of the intelligent network.

16. A system for implementing a prepaid service in a packet-switched mobile communication network, in which system a mobile station (MS) is delivered the information requested by it as long as there is prepaid balance left, which system comprises:
a mobile communication network (MCN);
a mobile station (MS) which is connected to the mobile communication network (MCN);
a service node (SN) which is connected to the mobile communication network (MCN);
a content server (CS) from which there is a connection to the service node (SN)
a control server (IMS) from which there is a connection to the service node (SN); and
a billing database (DB) to which billing information is saved and which is connected to the control server (IMS),
**characterized in that** the system further comprises:
an access point attribute (APN) which points to the service node (SN) via which it is possible to use the prepaid service;
a control unit (CU) adapted to monitor the data communication between the mobile station and the prepaid service and adapted to check the prepaid balance of the mobile station from the billing database (DB); and
an update unit (UU) adapted to update the prepaid balance of the mobile station in the database (DB) based on the use of the data service.

17. The system according to claim 16, **characterized in that** the system further comprises barring facilities for barring the use of the prepaid service.

18. The system according to claim 16 or 17, **characterized in that** as the packet-switched mobile communication network (MCN), the general packet radio service is used.

19. The system according to claim 16, 17 or 18, **characterized in that** as the packet-switched mobile communication network (MCN), the global system for mobile communication is used.

20. The system according to claim 16, 17, 18 or 19, **characterized in that** the service node (SN) consists of a gateway GPRS support node (GGSN) and serving GPRS support node (SGSN).

21. The system according to claim 16, 17, 18, 19 or 20, **characterized in that** the control server (IMS) has been integrated with the gateway GPRS support node (GGSN).

## Patentansprüche

1. Verfahren zum Implementieren eines im Voraus bezahlten Dienstes in einem paketvermittelten mobilen Kommunikationsnetzwerk (MCN), wobei in dem Verfahren einer mobilen Station (MS) die von ihr angeforderte Information so lange geliefert wird, so lange ein im Voraus bezahltes Guthaben bzw. Saldo vorhanden ist, wobei bei dem Verfahren:
ein GPRS-Netzübergangs-Unterstützungsknoten (GGSN) zum Anzeigen der Orte der einzelnen Mobilstationen angewendet wird;
ein Inhalts-Server (CS) zum Implementieren des Dienstes angewendet wird;
ein Datendienst zur Datenkommunikation, welche zu verrechnen bzw. zu belasten ist, angewendet wird;
ein Steuer-Server (IMS) zum Steuern der Information angewendet wird;
eine Verrechnungsdatenbasis (DB) zum Speichern der Verrechnungsinformation angewendet wird;
**dadurch gekennzeichnet, dass** das verfahren ferner die Schritte aufweist:
Definieren einer Zugriffspunkt-Namensdefinition (APN), welche auf den Netzübergangs-GPRS-Unterstützungsknoten (GGSN) zeigt, durch den es möglich ist, den vorher bezahlten Dienst zu benutzen;
Anzeigen des Verkehrs zwischen der mobilen Station (MS) und dem Inhalts-Server (CS) mit Hilfe eines Steuer-Servers (IMS), nachdem die Zugriffspunkt-Namensdefinition, welche in der Aktivierungsanforderung des Datendienstes, welcher von der mobilen Station (MS) gesendet wurde,erwähnt wurde, auftrat, wobei das Anzeigen so lange andauert, wie der vorher erwähnte Datendienst aktiv ist, und
Aktualisieren des im Voraus bezahlten Dienst-Guthabens bzw. Saldos in der Verrechnungsdatenbasis (DB), basierend auf dem Anzeigen des Steuer-Servers (IMS).

2. Verfahren nach Anspruch 1, **dadurch gekennzeichnet, dass** die Zugriffspunkt-Namensdefinition in einem Heimatregister (HLR) angeordnet ist.

3. Verfahren nach Anspruch 1 oder 2, **dadurch gekennzeichnet, dass** vor dem Anzeigen des Verkehrs zwischen der mobilen Station (MS) und dem Inhalts-server (CS)
der Saldo des im Voraus bezahlten Dienstes von der Verrechnungsdatenbasis (DB) geprüft wird; und
das Nutzen des im Voraus bezahlten Dienstes gesperrt wird, wenn der im Voraus bezahlte Saldo in der Verrechnungsdatenbasis (DB) nicht ausreicht, um den Dienst zu nutzen.

4. Verfahren nach Anspruch 1, 2 oder 3, **dadurch gekennzeichnet, dass** während des Anzeigens des Verkehrs zwischen der mobilen Station (MS) und dem Inhalts-Server (CS)
der Saldo für den im Voraus bezahlten Service von der Verrechnungsdatenbasis (DB) geprüft wird; und
das Nutzen des im Voraus bezahlten Dienstes gesperrt wird, wenn der im Voraus bezahlte Saldo in der Verrechnungsdatenbasis (DB) nicht ausreicht, um den Dienst zu nutzen.

5. Verfahren nach Anspruch 1, 2, 3 oder 4, **dadurch gekennzeichnet, dass** das Nutzen des im Voraus bezahlten Dienstes gesperrt wird, indem das Übertragen der Pakete, welche an die mobile Station (MS) zu senden sind, gestoppt wird.

6. Verfahren nach Anspruch 1, 2, 3, 4 oder 5, **dadurch gekennzeichnet, dass** das Nutzen des im Voraus bezahlten Dienstes durch Senden einer Mitteilung an den Netzübergangs-GPRS-Unterstützungsknoten (GGSN) gesperrt wird.

7. Verfahren nach Anspruch 1, 2, 3, 4, 5 oder 6, **dadurch gekennzeichnet, dass** die Verrechnungsdatenbasis (DB) durch Hinzufügen der Hintergrundinformation, welche auf der Teilnehmernummer (MSISDN) basiert, aktualisiert wird.

8. Verfahren nach Anspruch 1, 2, 3, 4, 5, 6 oder 7, **dadurch gekennzeichnet, dass** die Verrechnungsdatenbasis (DB) durch Hinzufügen der Hintergrundinformation basierend auf der Teilnehmernummer (IMSI) aktualisiert wird.

9. Verfahren nach Anspruch 1, 2, 3, 4, 5, 6, 7 oder 8, **dadurch gekennzeichnet, dass** das Funkapplikationsprotokoll in der Verbindung genutzt wird.

10. Verfahren nach Anspruch 1, 2, 3, 4, 5, 6, 7, 8 oder 9, **dadurch gekennzeichnet, dass** eine Echtzeitverrechnung in dem Steuer-Server (IMS) angeordnet wird.

11. Verfahren nach Anspruch 1, 2, 3, 4, 5, 6, 7, 8, 9 oder 10, **dadurch gekennzeichnet, dass** eine auf einer Transaktion basierende Verrechnung in dem Steuer-Server (IMS) angeordnet wird.

12. Verfahren nach Anspruch 1, 2, 3, 4, 5, 6, 7, 8, 9, 10 oder 11, **dadurch gekennzeichnet, dass** eine auf einer Zeitlastschrift basierende Verrechnung in dem Steuer-Server (IMS) angeordnet wird.

13. Verfahren nach Anspruch 1, 2, 3, 4, 5, 6, 7, 8, 9, 10, 11 oder 12, **dadurch gekennzeichnet, dass** eine Verrechnung, welche auf dem Betrag bzw. der Menge an übertragener Information basiert, im Steuer-Server (IMS) angeordnet wird.

14. Verfahren nach Anspruch 1, 2, 3, 4, 5, 6, 7, 8, 9, 10, 11, 12 oder 13, **dadurch gekennzeichnet, dass** die Datenbasis (DB) auf dem Steuer-Server (IMS) platziert ist.

15. Verfahren nach Anspruch 1, 2, 3, 4, 5, 6, 7, 8, 9, 10, 11, 12, 13 oder 14, **dadurch gekennzeichnet, dass** die Datenbasis (DB) in dem SDP-Knoten des intelligenten Netzwerks platziert ist.

16. System zum Implementieren eines im Voraus bezahlten Dienstes in einem paketvermittelten mobilen Kommunikationsnetzwerk, wobei in dem System einer mobilen Station (MS) die von ihr angeforderte Information so lange geliefert wird, so lange ein im Voraus bezahlter Saldo zur Verfügung steht, wobei das System aufweist:
ein mobiles Kommunikationsnetzwerk (MCN);
eine mobile Station (MS), welche mit dem mobilen Kommunikationsnetzwerk (MCN) verbunden ist;
einen Diensteknoten bzw. eine Dienstezentrale (SN), welche mit dem mobilen Kommunikationsnetzwerk (MCN) verbunden ist;
einen Inhalts-Server (CS), von welchem aus es eine Verbindung zu der Dienstezentrale (SN) gibt;
einen Steuer-Server (IMS), von welchem aus es eine Verbindung zu der Dienstezentrale (SN) gibt; und
eine Verrechnungsdatenbasis (DB), in welcher die Verrechnungsinformation gespeichert wird und welche mit dem Steuer-Server (IMS) verbunden ist,
**dadurch gekennzeichnet, dass** das System ferner aufweist:
ein Zugriffspunkt-Datenelement (APN), welches auf die Dienstezentrale (SN) zeigt, über welches es möglich ist, den im Voraus bezahlten Dienst zu nutzen;
eine Steuereinheit (CU), welche adaptiert ist, um die Datenkommunikation zwischen der mobilen Station und dem im Voraus bezahlten Dienst anzuzeigen und welche angepasst ist, um den im Voraus bezahlten Saldo der mobilen Station von der Verrechnungsdatenbasis (DB) zu prüfen; und
eine Aktualisierungseinheit (UU), welche adaptiert ist, um den im Voraus bezahlten Saldo der Mobilstation in der Datenbasis (DB) zu aktualisieren, basierend auf der Benutzung des Datendienstes.

17. System nach Anspruch 16, **dadurch gekennzeichnet, dass** das System ferner eine Sperrmöglichkeit zum Sperren des Benutzens des im Voraus bezahlten Dienstes aufweist.

18. System nach Anspruch 16 oder 17, **dadurch gekennzeichnet, dass** als paketvermitteltes mobiles Kommunikationsnetzwerk (MCN) der allgemeine Paketradiodienst genutzt wird.

19. System nach Anspruch 16, 17 oder 18, **dadurch gekennzeichnet, dass** als paketvermitteltes mobiles Kommunikationsnetzwerk (MCN) das globale System für mobile Kommunikation genutzt wird.

20. System nach Anspruch 16, 17, 18 oder 19, **dadurch gekennzeichnet, dass** die Dienstezentrale (SN) aus einem Netzübergangs-GPRS-Unterstützungsknoten (GGSN) und einem Dienste-GPRS-Unterstützungsknoten (SGSN) besteht.

21. System nach Anspruch 16, 17, 18, 19 oder 20, **dadurch gekennzeichnet, dass** der Steuer-Server (IMS) mit dem Netzübergangs-GPRS-Unterstützungsknoten (GGSN) integriert worden ist.

## Revendications

1. Procédé pour mettre en place un service prépayé dans un réseau de communication mobile à commutation de paquets (MCN), procédé dans lequel une station mobile (MS) reçoit les informations qu'elle demande à condition qu'il reste un solde prépayé, procédé dans lequel :
un noeud de service GPRS de transit (GGSN) est activé pour surveiller les emplacements de stations mobiles distinctes ;
un serveur de contenu (CS) est activé pour mettre en place le service ;
un service d'accès aux données est activé pour facturer les communications de données ;
un serveur de contrôle (IMS) est activé pour contrôler les informations ;
une base de données de facturation (DB) est activée pour stocker les informations de facturation ;
**caractérisé en ce que** le procédé comprend en outre les étapes consistant à :
déterminer une définition du nom du point d'accès (APN) qui pointe vers le noeud de service GPRS de transit (GGSN) par ce qui est possible pour utiliser le service prépayé ;
surveiller le trafic entre la station mobile (MS) et le serveur de contenu (CS) au moyen d'un serveur de contrôle (IMS) après qu'il y ait eu mention de la définition du nom du point d'accès dans la demande d'activation du service d'accès aux données envoyée depuis la station mobile (MS), laquelle surveillance se poursuit tant que le service d'accès aux données susdit est en cours, et
mettre à jour le solde du service prépayé dans la base de données de facturation (DB) en se basant sur la surveillance du serveur de contrôle (IMS).

2. Procédé selon la revendication 1, **caractérisé en ce que** la définition du nom du point d'accès est disposée dans un enregistreur de localisation nominal (HLR).

3. Procédé selon la revendication 1 ou 2, **caractérisé en ce qu'**avant la surveillance du trafic entre la station mobile (MS) et le serveur de contenu (CS),
le solde du service prépayé est vérifié à partir de la base de données de facturation (DB) ; et
l'utilisation du service prépayé est bloquée, si le solde prépayé dans la base de données de facturation (DB) est insuffisant pour utiliser le service.

4. Procédé selon la revendication 1, 2 ou 3, **caractérisé en ce que** pendant la surveillance du trafic entre la station mobile (MS) et le serveur de contenu (CS),
le solde du service prépayé est vérifié à partir de la base de données de facturation (DB) ; et
l'utilisation du service prépayé est bloquée, si le solde prépayé dans la base de données de facturation (DB) est insuffisant pour utiliser le service.

5. Procédé selon la revendication 1, 2, 3 ou 4, **caractérisé en ce que** l'utilisation du service prépayé est bloquée en empêchant la transmission des paquets envoyés vers la station mobile (MS).

6. Procédé selon la revendication 1, 2, 3, 4 ou 5, **caractérisé en ce que** l'utilisation du service prépayé est bloquée en envoyant un message au noeud de service GPRS de transit (GGSN).

7. Procédé selon la revendication 1, 2, 3, 4, 5 ou 6, **caractérisé en ce que** la base de données de facturation (DB) est mise à jour en attribuant les informations de suivi basées sur le numéro d'abonné (MSISDN).

8. Procédé selon la revendication 1, 2, 3, 4, 5, 6 ou 7, **caractérisé en ce que** la base de données de facturation (DB) est mise à jour en attribuant les informations de suivi basées sur le numéro d'abonné (IMSI).

9. Procédé selon la revendication 1, 2, 3, 4, 5, 6, 7 ou 8, **caractérisé en ce que** le protocole d'application sans fil est utilisé dans la connexion.

10. Procédé selon la revendication 1, 2, 3, 4, 5, 6, 7, 8 ou 9, **caractérisé en ce qu'**une facturation en temps réel est disposée dans le serveur de contrôle (IMS).

11. Procédé selon la revendication 1, 2, 3, 4, 5, 6, 7, 8, 9 ou 10, **caractérisé en ce qu'**une facturation basée sur les échanges est disposée dans le serveur de contrôle (IMS).

12. Procédé selon la revendication 1, 2, 3, 4, 5, 6, 7, 8, 9, 10 ou 11, **caractérisé en ce qu'**une facturation basée sur le décompte du temps est disposée dans le serveur de contrôle (IMS).

13. Procédé selon la revendication 1, 2, 3, 4, 5, 6, 7, 8, 9, 10, 11 ou 12, **caractérisé en ce qu'**une facturation basée sur la quantité d'informations transférées est disposée dans le serveur de contrôle (IMS).

14. Procédé selon la revendication 1, 2, 3, 4, 5, 6, 7, 8, 9, 10, 11, 12 ou 13, **caractérisé en ce que** la base de données (DB) est située sur le serveur de contrôle (IMS).

15. Procédé selon la revendication 1, 2, 3, 4, 5, 6, 7, 8, 9, 10, 11, 12, 13 ou 14, **caractérisé en ce que** la base de données (DB) est située sur le noeud SDP du réseau intelligent.

16. Dispositif pour mettre en place un service prépayé dans un réseau de communication mobile à commutation de paquets, dispositif dans lequel une station mobile (MS) reçoit les informations qu'elle demande à condition qu'il reste un solde prépayé, lequel dispositif comprend :
un réseau de communication mobile (MCN) ;
une station mobile (MS) qui est connectée au réseau de communication mobile (MCN) ;
un noeud de service (SN) qui est connecté au réseau de communication mobile (MCN) ;
un serveur de contenu (CS) à partir duquel existe une connexion vers le noeud de service (SN) ;
un serveur de contrôle (IMS) à partir duquel existe une connexion vers le noeud de service (SN) ; et
une base de données de facturation (DB) dans laquelle les informations de facturation sont sauvegardées et qui est connectée au serveur de contrôle (IMS),
**caractérisé en ce que** le dispositif comprend en outre :
un attribut de point d'accès (APN) qui pointe vers le noeud de service (SN) par ce qui possible pour utiliser le service prépayé ;
une unité de contrôle (CU) adaptée pour surveiller les communication de données entre la station mobile et le service prépayé et adaptée pour vérifier le solde prépayé de la station mobile à partir de la base de données de facturation (DB) ; et
une unité de mise à jour (UU) adaptée pour mettre à jour le solde prépayé de la station mobile dans la base de données (DB) en se basant sur l'utilisation du service d'accès aux données.

17. Dispositif selon la revendication 16, **caractérisé en ce que** le dispositif comprend en outre des possibilités de blocage pour empêcher l'utilisation du service prépayé.

18. Dispositif selon la revendication 16 ou 17, **caractérisé en ce que** comme le réseau de communication mobile à commutation de paquets (MCN), le service général de radiocommunication par paquets est utilisé.

19. Dispositif selon la revendication 16, 17 ou 18, **caractérisé en ce que** comme le réseau de communication mobile à commutation de paquets (MCN), le système mondial de communication mobile est utilisé.

20. Dispositif selon la revendication 16, 17, 18 ou 19, **caractérisé en ce que** le noeud de service (SN) consiste en un noeud de service GPRS de transit (GGSN) et un noeud de support GPRS de service (SGSN).

21. Dispositif selon la revendication 16, 17, 18, 19 ou 20, **caractérisé en ce que** le serveur de contrôle (IMS) a été intégré avec le noeud de service GPRS de transit (GGSN).
